# EUROPÄISCHE PATENTSCHRIFT

(11) **EP 4 067 837 B1**
(45) Veröffentlichungstag und Bekanntmachung des Hinweises auf die Patenterteilung: **07.08.2024**
(21) Anmeldenummer: 21166337.2
(22) Anmeldetag: 31.03.2021
(51) Int. Cl.: G01G 19/52

(54) **SICHERHEITSEINRICHTUNG INSBESONDERE SICHERHEITSSCHRANK**
SAFETY DEVICE, IN PARTICULAR SAFETY CABINET
DISPOSITIF DE SÉCURITÉ, EN PARTICULIER UNE ARMOIRE DE SÉCURITÉ

(43) Veröffentlichungstag der Anmeldung: 05.10.2022
(73) Patentinhaber: Düperthal Sicherheitstechnik GmbH & Co.KG, 63791 Karlstein (DE)
(72) Erfinder: Backhaus, Frank, 32051 Herford (DE)
(74) Vertreter: Andrejewski - Honke Patent- und Rechtsanwälte Partnerschaft mbB

(56) Entgegenhaltungen:
- DE-A1- 102007 031 380
- DE-A1- 102015 112 943
- DE-U1- 202017 102 435

## Beschreibung

Die Erfindung betrifft einen Sicherheitsschrank, zur Aufnahme und Bevorratung zumindest eines in einem Gebinde aufgenommenen Gefahrstoffes, mit einer Grundfläche zur Aufnahme des Gefahrstoffes, und mit zumindest einem der Grundfläche zugeordneten Wägesensor mit angeschlossener Steuereinheit, um den Gefahrstoff hinsichtlich seiner Masse, seines Verbrauches etc. zu erfassen.

Bei Sicherheitsschränken handelt es sich typischerweise um abgeschlossene Räume bzw. Bereiche, in denen Gefahrstoffe aufbewahrt und gelagert werden können. Tatsächlich zeichnen sich solche Gefahrstoffe und insbesondere flüssige Gefahrstoffe unter anderem dadurch aus, dass von Ihnen explosive Dämpfe ausgehen können, wie dies beispielsweise bei Lösungsmitteln wie Aceton der Fall ist. Der Sicherheitsschrank sorgt in diesem Zusammenhang dafür, dass beispielsweise im Brandfall die Gefahrstoffe bzw. Gefahrgüter geschützt und Explosionen verhindert oder doch zumindest auf den Sicherheitsschrank beschränkt werden.

Zu diesem Zweck verfügen Sicherheitsschränke und vorzugsweise Gefahrstoffschränke zur Lagerung von insbesondere Chemikalien oder anderen meistens flüssigen Gefahrgütern über eine bestimmte Feuerbeständigkeit. Diese kann beispielsweise zu einer Feuerwiderstandsfähigkeit von 60 min. oder 90 min. korrespondieren. Auf diese Weise werden insbesondere im Brandfall etwaige Feuer, Explosionen etc. vermieden. Das hat sich grundsätzlich bewährt. Generell können natürlich auch feste Gefahrstoffe in beispielsweise Behältern oder auch gasförmige Gefahrstoffe in Druckgasflaschen oder dergleichen in dem Sicherheitsschrank bevorratet werden.

So beschäftigt sich das Gebrauchsmuster DE 20 2015 100 532 U1 der Anmelderin mit einem solchen Sicherheitsschrank, der zusätzlich Informationen über die im Schrank gelagerten Gefahrstoffe liefert. Dazu kann beispielhaft ein mithilfe einer Leseeinheit auslesbares Etikett, ein Barcode, ein QR-Code etc. am jeweiligen und den Gefahrstoff aufnehmende Behälter bzw. seinem Gebinde vorhanden sein. Die entsprechenden Daten werden an die Steuereinheit zur weiteren Verarbeitung übergeben.

Vergleichbar geht der Stand der Technik nach der DE 20 2019 104 431 U1 vor. In diesem Fall ist ein Sicherheitsschrank im Innern mit wenigstens einer RFID-Antenneneinheit (radio frequency identification) ausgerüstet. Hierdurch können einzelne RFID-tags bzw. Etiketten an im Schrank gelagerten Produkten automatisch ausgelesen und an die Steuereinheit übermittelt werden.

Die DE 10 2007 031 380 A1 befasst sich mit einer Waage mit einer Wiegefläche. Dabei ist zumindest einer Position auf der Wiegefläche eine Eingabeoption zugeordnet. Durch Berühren der dieser Eingabeoption zugeordneten Position kann die Wiegefläche ausgewählt werden. Dadurch lässt sich eine Eingabeoption zuverlässig auswählen und kann eine zugehörige Waage kostengünstig hergestellt werden.

Beim gattungsbildenden Stand der Technik nach der DE 20 2017 102 435 U1 wird so vorgegangen, dass der dortige Sicherheitsschrank mit einer Wägeeinrichtung und insbesondere einer Wägezelle ausgerüstet ist. Die Wägezelle als Wägesensor übermittelt masseproportionale elektrische Signale an die Steuereinheit. Dazu sind im Regelfall mehrere Wägezellen vorgesehen, die beispielsweise fußseitig verteilt eines Schrankkorpus und/oder eines Schrankbestandteils angeordnet sind. Auf diese Weise kann mit Hilfe der Wägeeinrichtung bzw. der mehreren Wägezellen eine Aussage über Verbrauchswerte des jeweiligen Gefahrstoffes getroffen werden. Dadurch lassen sich nicht nur Rückschlüsse auf den Füllstand oder die Füllmenge ziehen, sondern können die Verbrauchswerte für etwaige Nachbestellungen, Plausibilitätsabfragen und/oder Sicherheitsabfragen ausgewertet werden. Das hat sich grundsätzlich bewährt.

Zwar kann eine solche Wägeeinrichtung bzw. Wägezelle oder allgemein ein Wägesensor grundsätzlich auch nachträglich an bzw. in einem Sicherheitsschrank angebracht werden. Das setzt allerdings oftmals umfassende Modifikationen voraus. D. h., eine etwaige Nachrüstung vorhandener Sicherheitsschränke ist schwierig. Hinzukommt, dass heutzutage zunehmend Anforderungen dahingehend bestehen, nicht nur Aussagen über den jeweiligen Füllstand oder Verbrauch des betreffenden Gefahrstoffes treffen zu wollen. Sondern es stellt sich oftmals auch die weitergehende Problematik, dass das Gebinde des Gefahrstoffes eine spezielle Behandlung erfordert.

So lassen sich beispielsweise Flaschen zur Aufnahme von Lösungsmitteln noch relativ problemlos handhaben und bewegen. Befindet sich der Gefahrstoff allerdings beispielsweise in einem Kanister oder Fass oder einem anderen voluminösen Behältnis oder Gebinde, so erfordert dies oftmals spezielle Maßnahmen für die Entnahme des Gefahrstoffes aus dem Sicherheitsschrank ebenso wie für seinen Transport. Oftmals sind hierzu spezielle Fördermittel erforderlich. Das setzt die Kenntnis des betreffenden Gebindes voraus, um unnötige Arbeitsschritte zur Beschaffung des betreffenden Fördermittels von vornherein zu vermeiden. An dieser Stelle gibt es bisher im Stand der Technik keine überzeugenden Lösungen.

Der Erfindung liegt das technische Problem zugrunde, einen derartigen Sicherheitsschrank so weiterzuentwickeln, dass insgesamt die Entnahme und Beförderung des bevorrateten Gefahrstoffes erleichtert ist.

Zur Lösung dieser technischen Problemstellung schlägt die Erfindung bei einem gattungsgemäßen Sicherheitsschrank vor, dass der Wägesensor als Flächensensor ausgebildet ist, um ergänzend die Geometrie des Gebindes zu ermitteln, wobei der Wägesensor als Drucksensormasse mit flächig angeordneten Drucksensoren ausgebildet ist, sodass anhand der topologischen Verteilung des Signals über die Drucksensoren gesehen eine Aussage über die Geometrie des Gebindes getroffen werden kann.

Im Rahmen der Erfindung kommt also im Unterschied zum gattungsbildenden Stand der Technik nach der DE 20 2017 102 435 U1 ein spezieller Wägesensor zum Einsatz, nämlich ein solcher, der zugleich als Flächensensor ausgebildet ist. Mithilfe dieses Flächensensors kann dabei nicht nur die Masse bzw. das Gewicht des Gefahrstoffes ermittelt werden, um Aussagen über etwaige Verbrauchswerte, Füllstände etc. an die Steuereinheit übermitteln zu können. Sondern erfindungsgemäß ist die Ausprägung des Wägesensors zugleich als Flächensensor geeignet, um ergänzend die Geometrie des Gebindes zu ermitteln.

D. h., mithilfe des Wägesensors kann zugleich auch eine Aussage dahingehend getroffen werden, in welcher Art von Gebinde sich der gewünschte Gefahrstoff befindet, ob es sich beispielsweise um eine Flasche, einen Kanister, ein Fass etc. handelt. Als Folge hiervon wird ein den Gefahrstoff einsetzender Benutzer umfassend über den Gefahrstoff und sein Gebinde informiert, um von vornherein vorbereitende Maßnahmen beispielsweise zur Entnahme des Gefahrstoffes, seiner Beförderung und anschließenden Verarbeitung treffen zu können.

Beispielsweise erfordern besonders voluminöse Gebinde wie Fässer oder Kanister in der Regel spezielle Fördermaßnahmen bzw. Fördermittel wie beispielsweise Flurförderzeuge, rollbare Halterungen etc., um das Gebinde mit dem darin befindlichen Gefahrstoff aufnehmen, transportieren und am gewünschten Arbeitsort auch verabreichen zu können.

Da erfindungsgemäß folglich nicht nur die Masse bzw. das Gewicht des gewünschten Gefahrstoffes ermittelt und an die Steuereinheit übertragen wird, sondern zusätzlich auch das in diesem Zusammenhang eingesetzte Gebinde eine Berücksichtigung erfährt, können mithilfe der Steuereinheit nicht nur zuverlässige Aussagen hinsichtlich des Volumens des Gebindes und seiner Handhabung gegenüber dem Benutzer getroffen werden. Sondern der Benutzer wird ergänzend auch dahingehend informiert, wie groß beispielsweise das Gesamtgewicht bzw. die Gesamtmasse des Gefahrstoffes inklusive Gebinde im konkreten Einzelfall bemessen ist, um in Abhängigkeit hiervon Rückschlüsse im Hinblick auf die Beförderung ziehen zu können. Diese Rückschlüsse beinhalten auch Entscheidungen dahingehend, ob der Benutzer beispielsweise den gewünschten Gefahrstoff aus einem unmittelbar in der Nähe befindlichen Sicherheitsschrank in einem dort vorhandenen Kanister entnimmt oder nicht vielmehr einen weiter entfernt befindlichen anderen Sicherheitsschrank aufsucht, in dem der betreffende Gefahrstoff beispielsweise in einer Flasche bevorratet ist, die sich leichter handhaben lässt. Derartige Entscheidungen können erfindungsgemäß nunmehr aufgrund der der Steuereinheit übermittelten Informationen vom Benutzer unschwer getroffen werden. Hierin sind die wesentlichen Vorteile zu sehen.

Erfindungsgemäß ist der Wägesensor als Drucksensor ausgebildet. D. h., mithilfe des Wägesensors werden Druckmessungen ausgeführt und unter Berücksichtigung der mit dem Druck beaufschlagten Fläche auf eine Kraft bzw. Gewichtskraft umgerechnet. Dabei wird zusätzlich so vorgegangen, dass der Wägesensor als Drucksensormatte mit den flächig angeordneten Drucksensoren ausgebildet ist.

Durch den Rückgriff auf eine solche Drucksensormatte mit den flächig angeordneten Drucksensoren kann nicht nur das Gewicht bzw. die Masse des Gefahrstoffes inklusive Gebinde ermittelt werden. Sondern anhand der topologischen Verteilung des Signals über die Drucksensoren gesehen lässt sich auch eine Aussage über die Geometrie des Gebindes treffen. Werden beispielsweise die Drucksensoren unter Berücksichtigung einer kreisförmigen Fläche mit Druck beaufschlagt, so ist davon auszugehen, dass der betreffende Gefahrstoff in einer kreiszylindrischen Flasche bevorratet wird. Erfolgt die Druckbeaufschlagung mit dem gewünschte Gefahrstoff dagegen überwiegend unter Berücksichtigung einer rechteckigen oder quadratischen Fläche, so ist von einer Bevorratung in einem Kanister auszugehen. Das alles gelingt mit einem einzigen Wägesensor, nämlich der Drucksensormatte, der sich darüber hinaus unschwer nachrüsten lässt.

Die Ermittlung der Geometrie des Gebindes und folglich des den Gefahrstoff aufnehmenden Gebindes in der Steuereinheit ist mit dem weiteren Vorteil ausgerüstet, dass an dieser Stelle zusätzlich und erfindungsgemäß Sicherheitsabfragen vorgenommen werden können. Beispielsweise kann eine zusätzliche Prüfung durchgeführt werden, und zwar dahingehend, ob der betreffende und gewünschte Gefahrstoff in einem für ihn zulässigen Gebinde im Sicherheitsschrank bevorratet und abgestellt ist. Sollte dies nicht der Fall sein, so kann dies mit einer zusätzlichen Warnmeldung an der Steuereinheit angezeigt werden.

Die Drucksensormatte ist in der Regel im Detail mit mehreren Dünnfilm-Sensoren in flächiger Verteilung ausgerüstet. Tatsächlich können die einzelnen Dünnfilm-Sensoren gleichmäßig beispielsweise schachbrettartig über die gesamte Fläche der Drucksensormatte verteilt angeordnet werden. Die Dünnfilm-Sensoren können dabei auf Basis von Dehnungsmessstreifen arbeiten. Dabei werden die Dehnungsmessstreifen in der Regel und jeweils zu einer Wheatstoneschen Brücke verschaltet. Auf diese Weise führt eine Druckbeaufschlagung des betreffenden Sensors auf Basis der Dehnmeßstreifen bzw. Dehnungsmessstreifen in bekannter Art und Weise dazu, dass die Brückenschaltung einen gegenüber dem unbelasteten Zustand abweichenden Widerstandswert aufweist, der über eine die Brückenschaltung beaufschlagende Versorgungschaltung bzw. Versorgungseinheit abgegriffen werden kann. Da die auf diese Weise gemessene Widerstandsänderung masse- bzw. druckproportional ausgebildet ist, lassen sich hieraus unmittelbar Werte für die den betreffenden Drucksensor bzw. Dünnfilm-Sensor beaufschlagenden Druck und damit die Masse ableiten. Sofern das Gebinde des gewünschten Gefahrstoffes mehrere dieser Drucksensoren bzw. Dünnfilm-Sensoren beaufschlagt, gibt die Summe der jeweiligen auf diese Weise ermittelten Einzelmassen Auskunft über die Gesamtmasse des Gefahrstoffes im Gebinde. Zugleich lässt sich aus der topologischen Beaufschlagung der Dünnfilm-Sensoren (beispielsweise kreisförmig oder quadratisch oder rechteckig) auf das eingesetzte Gebinde rückschließen.

Anstelle von Dünnfilm-Sensoren auf Basis von Dehnungsmessstreifen bzw. Dehnmeßstreifen können aber auch Dünnfilm-Sensoren mit Dreischichtaufbau zum Einsatz kommen. Hier wird typischerweise so vorgegangen, dass zwischen zwei elektrisch leitfähigen Außenschichten eine elastisch komprimierbare (elektrisch isolierende) Mittelschicht angeordnet ist. Dabei wird zwischen den elektrisch leitfähigen Außenschichten die elektrische Kapazität gemessen, welche sich in Abhängigkeit von der jeweiligen Druckbelastung des Dünnfilm-Sensors entsprechend ändert und Auskunft über die Kraftbeaufschlagung und damit das Gewicht und die Masse des Gefahrstoffes inklusive Gebinde gibt. Die Messung erfolgt dabei erneut ortsaufgelöst, d. h. gibt zusätzlich Auskunft über die einzelnen von dem Gefahrstoff inklusive Gebinde beaufschlagten Drucksensoren bzw. Dünnfilm-Sensoren und ihre geometrische Anordnung, sodass wie im Fall der Dünnfilm-Sensoren auf Basis von Dehnungsmessstreifen erneut und ergänzend Auskunft über das jeweils für den betreffenden Gefahrstoff eingesetzte Gebinde gegeben wird. Eine entsprechend aufgebaute Drucksensormasse wird beispielsweise im Stand der Technik nach der DE 10 2014 201 434 B4 vorgestellt und beschrieben, auf die für weitere Einzelheiten verwiesen sei.

Um den Gefahrstoff in diesem Zusammenhang einwandfrei zu identifizieren, ist der Gefahrstoff in der Regel mit einem Identifizierungsmittel ausgerüstet. Bei dem Identifizierungsmittel handelt es sich um einen QR-Code bzw. ein mit einem solchen QR-Code ausgerüstetes Etikett, einen anderen Code auf diesem Etikett, einen RFID-Tag, also ein durch Radiowellen auslesbares Etikett, einen NFC-Tag (Nearfeld communication), also ein durch Nahfeldkommunikation auslesbares Etikett etc. Selbstverständlich kann in diesem Zusammenhang auch auf ohnehin vorhandene Identifizierungsmittel, beispielsweise einen Barcode auf dem Etikett des Gefahrstoffes, zurückgegriffen werden.

Zur Erfassung des Identifizierungsmittels ist in der Regel ein Lesegerät vorgesehen. Bei dem Lesegerät handelt es sich meistens um ein mobiles Lesegerät, beispielsweise ein Mobiltelefon. Mithilfe des Lesegerätes können die vom Identifizierungsmittel zur Verfügung gestellten und den Gefahrstoff betreffenden Daten an die Steuereinheit übermittelt werden. Das lässt sich drahtgebunden oder drahtlos realisieren. Die Steuereinheit kann zu diesem Zweck einen Bestandteil des Sicherheitsschrankes darstellen. Genauso gut kann der Sicherheitsschrank aber auch über ein Netzwerk beispielweise das Internet, mit der Steuereinheit kommunizieren. Hier ist unter anderem eine sogenannte Cloud-Lösung denkbar. Ebenso lassen sich Mischformen mit einer dem Sicherheitsschrank zugeordneten Steuereinheit und zusätzlich einer zentralen Steuereinheit realisieren.

Tatsächlich wird meistens so vorgegangen, dass ein den Gefahrstoff charakterisierender Gefahrstoff-Identifikationscode und ein zum Signal des Flächensensors gehöriger Gebinde-Identifikationscode sowie schließlich ein Verbrauchs-Identifikationscode an den Sicherheitsschrank übermittelt und hier miteinander verknüpft werden.

Der Gefahrstoff-Identifikationscode wird dabei durch Auslesen des Identifizierungsmittels des Gefahrstoffes erzeugt. Aus dem Signal des Flächensensors kann auf das Gebinde rückgeschlossen werden, sodass als Folge hiervon der Gebinde-Identifikationscode zur Verfügung steht. Zu diesem Zweck ist der Drucksensor bzw. die Drucksensormatte mit der elektrischen Versorgungseinheit verbunden, die zugleich die Widerstandsmessungen im Falle der Dehnungsmessstreifen oder die Kapazitätsmessungen beim Dreischichtaufbau der Dünnfilm-Sensoren vornimmt. Die entsprechenden Werte und folglich der Verbrauch respektive die Füllmenge des betreffenden Gefahrstoffes korrespondiert nun zum Verbrauchs-Identifikationscode. Außerdem kann aus den ortsaufgelösten Messungen der Drucksensormasse mithilfe der zugehörigen elektrischen Versorgungseinheit auf die Geometrie des Gebindes rückgeschlossen werden. Als Folge hiervon wird auch der Gebinde-Identifikationscode erzeugt und zusammen mit dem Verbrauchs-Identifikationscodes seitens der elektrischen Versorgungseinheit der Drucksensormasse an die Steuereinheit übermittelt. Das kann erneut drahtgebunden oder drahtlos erfolgen.

Schließlich empfiehlt die Erfindung zusätzlich noch die Realisierung einer Zugangskontrolleinheit für einen Benutzer. Auf diese Weise ist sichergestellt, dass nur ein zutrittsberechtigter Benutzer Zugang zu **dem Sicherheitsschrank** erhält und den gewünschten Gefahrstoff entnehmen kann. Dadurch kann die Gefahrstoffentnahme und ein hiermit verbundener Verbrauch unmittelbar und eineindeutig mit einem entsprechenden Benutzer korreliert werden. Für die Zutrittskontrolle nutzt die Zutrittskontrolleinheit typische Vorgehensweisen, ist zu diesem Zweck beispielsweise mit einer Tastatur ausgerüstet, über die der zutrittswillige Benutzer einen persönlichen Code eingeben muss. Generell sind auch andere den Benutzer identifizierende Maßnahmen wie beispielsweise ein Fingerabdruckscan, das Auslesen einer Codekarte, eines Mobiltelefons oder allgemein eines Ausweises etc. denkbar, um den zutrittswilligen Benutzer eindeutig zu identifizieren.

Im Ergebnis wird ein Sicherheitsschrank zur Verfügung gestellt, mit dessen Hilfe ein berechtigter Benutzer umfassend über den gewünschten Gefahrstoff informiert wird. Dazu ist es denkbar, dass die einzelnen Codes (Gefahrstoff-Identifizierungscode Gebinde-Identifizierungscode, Verbrauchs-Identifizierungscode) seitens der Steuereinheit an das zuvor bereits angesprochene Lesegerät und insbesondere mobile Lesegerät gesandt und hier wiedergegeben werden. Dazu verfügt das Lesegerät in der Regel über eine Wiedergabeeinheit. Kommt beispielsweise als mobiles Lesegerät ein Mobiltelefon zum Einsatz, so kann dieses folglich nicht nur zum Auslesen des Identifizierungsmittels des Gefahrstoffes genutzt werden, sondern gibt dem zugehörigen Benutzer umfassend Auskunft über den gewünschten Gefahrstoff.

Diese Auskunft enthält nicht nur Angaben dahingehend, welche Füllmenge des betreffenden Gefahrstoffes vorhanden ist sowie Angaben über den Gefahrstoff und seine chemischen und physikalischen Eigenschaften. Sondern der Benutzer erhält auch weitergehende Informationen über das den Gefahrstoff aufnehmende Gebinde, das aktuelle Gesamtgewicht bzw. die Gesamtmasse aus Gefahrstoff und Gebinde, das Volumen des Gebindes etc. Als Folge hiervon kann über die Steuereinheit auch ein Vorschlag an das mobile Lesegerät bzw. die dortige Wiedergabeeinheit übermittelt werden, und zwar dahingehend, welche Art von Beförderung im konkreten Beispielfall des gewünschten Gefahrstoffes in dem zugehörigen Gebinde empfohlen wird. Eine derartige Informationsdichte ist dem bisherigen Stand der Technik fremd.

Im Folgenden wird die Erfindung anhand einer lediglich ein Ausführungsbeispiel darstellenden Zeichnung näher erläutert; es zeigen:
- Fig. 1: Ein erfindungsgemäßer Sicherheitsschrank in einer Übersicht und
- Fig. 2: die in diesem Zusammenhang eingesetzte Drucksensormatte in Detaildarstellungen.

In den Figuren ist ein Sicherheitsschrank 1 dargestellt, welcher zur Aufnahme und Bevorratung zumindest eines in einem Gebinde 2, 3 aufgenommenen Gefahrstoffes 4 dient. Tatsächlich handelt es sich im Rahmen des Ausführungsbeispiels und nicht einschränkend bei dem Gefahrstoff 4 um einen flüssigen Gefahrstoff, im Ausführungsbeispiel um ein Lösemittel wie beispielsweise Aceton. Als eingesetzte Gebinde kommen beispielhaft eine Flasche 2 einerseits und ein Kanister 3 andererseits zum Einsatz.

Der im Gebinde 2, 3 aufgenommene Gefahrstoff 4 wird insgesamt von einer Grundfläche 5 im Innern des Sicherheitsschrankes aufgenommen. Bei der Grundfläche 5 handelt es sich ganz allgemein um einen Schrankboden im Innern des Sicherheitsschrankes 1, eine Schublade, ein Fach etc. Außerdem ist wenigstens ein der Grundfläche 5 zugeordneter Wägesensor 6 mit angeschlossener Steuereinheit 7 realisiert.

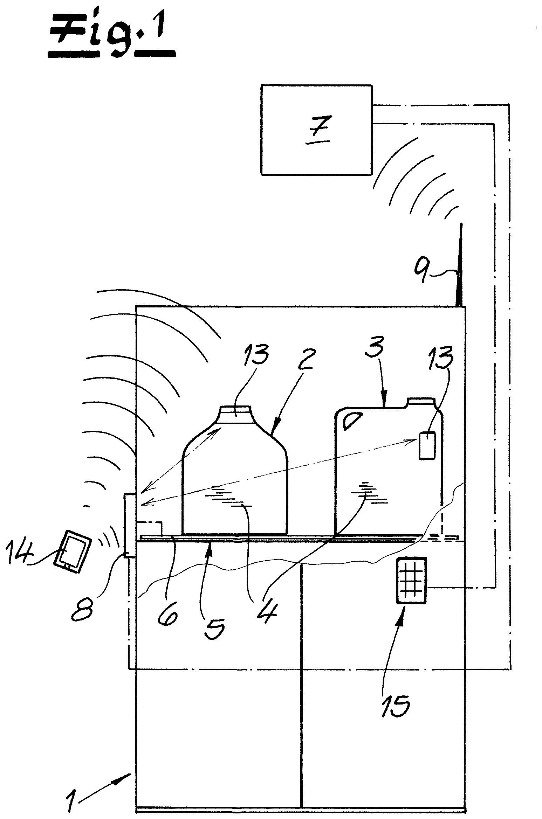

Zur elektrischen Stromversorgung des Wägesensors 6 und Erfassung der vom Wägesensor 6 abgegebenen Messdaten ist eine elektrische Versorgungseinheit 8 realisiert, die mit der Steuereinheit 7 über eine Verbindungsleitung gekoppelt ist. Selbstverständlich liegt es auch im Rahmen der Erfindung, die von der elektrischen Versorgungseinheit 8 aufgenommenen Messdaten alternativ oder zusätzlich drahtlos an die Steuereinheit 7 zu übermitteln. Das ist ebenfalls in der Figur 1 durch eine dort angedeutete Antenne 9 zur drahtlosen Kommunikation mit der Steuereinheit 7 wiedergegeben.

Mithilfe des zumindest einen Wägesensor 6 kann der gewünschte Gefahrstoff 4 hinsichtlich seiner Masse, seines Verbrauches etc. erfasst werden. Erfindungsgemäß ist nun der Wägesensor 6 zusätzlich als Flächensensor ausgebildet, um ergänzend die Geometrie des zur Bevorratung des betreffenden Gefahrstoffes 4 eingesetzten Gebinde 2, 3 zu ermitteln. Tatsächlich handelt es sich bei dem Wägesensor 6 um einen Drucksensor.

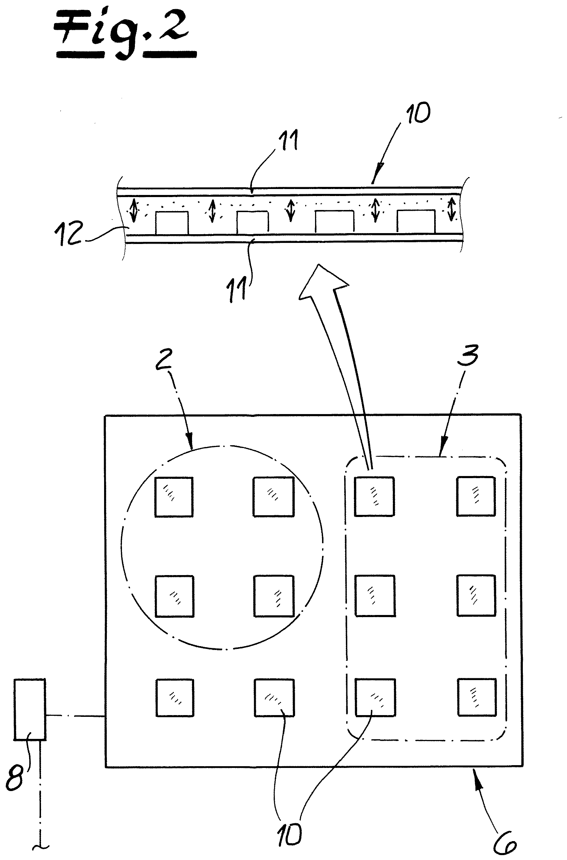

Nach dem Ausführungsbeispiel ist der Wägesensor 6 als Drucksensormatte 6 mit einer Vielzahl flächig angeordneter Dünnfilm-Sensoren 10 bzw. Drucksensoren ausgebildet. Diese einzelnen Dünnfilm-Sensoren 10 verfügen im Rahmen des Ausführungsbeispiels nach der Figur 2 über eine jeweils quadratische Ausdehnung und ermöglichen eine ortsaufgelöste Messung der Beaufschlagung durch ihre flächige schachbrettartige Verteilung auf der Drucksensormatte 6. Das ist in der Figur 2 angedeutet. Tatsächlich kann beispielsweise aus der Anzahl und Anordnung der jeweils beaufschlagten Dünnfilm-Sensoren 10 auf die Geometrie des Gebindes 2, 3 rückgeschlossen werden. Die Drucksensormatte 6 kann unschwer nachgerüstet und auf die Grundfläche 5 aufgelegt werden, um dann seinerseits die hierauf abgestellten Gebinde 2, 3 mit dem Gefahrstoff 4 aufzunehmen.

Das erkennt man anhand der Fig. 2, in welcher beispielhaft die rechteckige Querschnittsform des Kanisters 3 und die hieraus resultierende Beaufschlagung von insgesamt sechs Dünnfilm-Sensoren 10 im Vergleich zur runden Querschnittsform der Flasche 2 dargestellt ist, aus der lediglich die Beaufschlagung von vier Dünnfilm-Sensoren 10 im Beispielfall resultiert. Als Folge hiervon lassen sich ortsaufgelöste Messungen der jeweiligen Kraft bzw. Druckbeaufschlagung der Drucksensormatte 6 mithilfe der elektrischen Versorgungseinheit 8 vornehmen und kann folglich die Art des eingesetzten Gebindes 2, 3 (im Beispielfall Flasche 2 oder Kanister 3) ermittelt werden. Zu dem Gebinde bzw. der Art des Gebindes gehört ein Gebinde-Identifikationscode, welcher seitens der elektrischen Versorgungseinheit 8 an die Steuereinheit 7 übermittelt wird.

Die einzelnen Dünnfilm-Sensoren 10 im Rahmen der Darstellung nach der Fig. 2 verfügen über einen im oberen Teil der Fig. 2 dargestellten Dreischichtaufbau. Tatsächlich sind an dieser Stelle zwei elektrisch leitfähige Außenschichten 11 und dazwischen eine elastisch komprimierbare elektrisch isolierende Mittelschicht 12 realisiert. Eine Druck- und damit Kraftbeaufschlagung des betreffenden Dünnfilm-Sensors 10 hat nun zur Folge, dass hiermit Kapazitätsänderungen zwischen den beiden elektrisch leitfähigen Außenschichten 11 einhergehen, die ein Maß für die Kraftbeaufschlagung darstellen. Diese Kapazitätsänderungen werden von der elektrischen Versorgungseinheit 8 als Messdaten aufgenommen und korrespondieren zu einer Füllmenge bzw. Verbrauchsmenge des betreffenden Gefahrstoffes 4. Hieraus wird ein Verbrauchs-Identifikationscodes abgeleitet, der erneut seitens der elektrischen Versorgungseinheit 8 an die Steuereinheit 7 übermittelt wird.

Das Gebinde 2, 3 bzw. der Gefahrstoff 4 ist seinerseits mit einem Identifizierungsmittel 13 ausgerüstet. Bei diesem Identifizierungsmittel 13 handelt es sich um ein Etikett mit einem aufgedruckten QR-Code im Beispielfall. Dieser QR-Code kann mithilfe eines mobilen Lesegerätes 14 ausgelesen werden. Bei dem mobilen Lesegerät 14 handelt es sich im Ausführungsbeispiel und nicht einschränkend um ein Mobiltelefon, welches die Daten des Identifizierungsmittels bzw. QR-Codes an die Steuereinheit 7 übermittelt, und zwar im Ausführungsbeispiel drahtlos. Selbstverständlich ist auch eine drahtgebundene Übermittlung an die Steuereinheit 7 denkbar.

Der QR-Code bzw. das Identifizierungsmittel 13 korrespondiert nun seinerseits zu einem den Gefahrstoff 4 charakterisierenden Gefahrstoff-Identifizierungscode, der auf diese Weise im mobilen Lesegerät 14 erzeugt und an die Steuereinheit 7 übermittelt wird. Auf diese Weise verfügt die Steuereinheit 7 in der Regel über den den Gefahrstoff charakterisierenden Gefahrstoff-Identifikationscode, den zum Signal des Flächensensors bzw. Wägesensors 6 gehörigen Gebinde-Identifikationscode sowie schließlich den die Füllmenge bzw. den Verbrauch des Gefahrstoffes 4 charakterisierenden Verbrauchs-Identifikationscode, die insgesamt in der Steuereinheit 7 miteinander verknüpft werden können. Auf diese Weise kann die Steuereinheit 7 umfassend Auskunft über die Füllmenge des betreffenden Gefahrstoffes 4, das eingesetzte Gebinde 2, 3, das Gesamtgewicht aus Gefahrstoff 4 und Gebinde 2, 3, etwaige notwendige Fördermittel zum Transport und zur Aufnahme des Gefahrstoffes 4 im Gebinde 2, 3 etc. erzeugen und zur Wiedergabe an das mobile Lesegerät 14 übermitteln. Dazu ist das mobile Lesegerät 14 mit einer entsprechenden Wiedergabeeinheit, beispielsweise einem Bildschirm, ausgerüstet.

Schließlich ist der Sicherheitsschrank noch mit einer Zugangskontrolleinheit 15 versehen, mit deren Hilfe sich ein zutrittswilliger Benutzer gegenüber dem Sicherheitsschrank 1 zunächst ausweisen muss, um überhaupt Zugang zum Gefahrstoff 4 zu erlangen. Dazu verfügt der Sicherheitsschrank 1 über zumindest eine abschließbare Tür, die nur dann geöffnet wird bzw. von dem zutrittswilligen Benutzer geöffnet werden kann, wenn sich dieser zuvor gegenüber dem Sicherheitsschrank 1 identifiziert und ausgewiesen hat. Das kann im einfachsten Fall dadurch erfolgen, dass der betreffende Benutzer einen zu ihm gehörigen Code zur Individualisierung an einer angedeuteten Tastatur der Zutrittskontrolleinheit 15 eingibt. Alternativ hierzu ist es aber auch denkbar, dass die Zutrittskontrolleinheit 15 zur Identifizierung des zutrittswilligen Benutzers über einen Fingerabdruckscanner, einen Scanner für einen Ausweis, eine Schnittstelle zur Identifizierung mithilfe des mobilen Lesegerätes 14 bzw. des Mobiltelefones etc. verfügt.

Hierdurch ist sichergestellt, dass lediglich ein zuvor identifizierter Benutzer überhaupt Zugang zu dem gewünschten Gefahrstoff 4 erhält. Dieser Benutzer wird erfindungsgemäß beispielsweise über sein mobiles Lesegerät 14 bzw. das an dieser Stelle eingesetzte Mobiltelefon umfassend über den gewünschten Gefahrstoff 4, sein Vorhandensein, die Füllmenge, etwaige Verbräuche, das eingesetzte Gebinde 2, 3, etwaige Zusatzmaßnahmen zur Aufnahme und zum Transport des Gefahrstoffes 4 etc. informiert. Hierin sind die wesentlichen Vorteile zu sehen.

## Patentansprüche

1. Sicherheitsschrank (1), zur Aufnahme und Bevorratung bevorzugt zumindest eines in einem Gebinde (2, 3) aufgenommenen Gefahrstoffes (4), mit einer Grundfläche (5) zur Aufnahme des Gefahrstoffes (4), und mit zumindest einem der Grundfläche (5) zugeordneten Wägesensor (6) mit angeschlossener Steuereinheit (7), um den Gefahrstoff (4) hinsichtlich seiner Masse, seines Verbrauches etc. zu erfassen,
**dadurch gekennzeichnet, dass**
der Wägesensor (6) als Flächensensor ausgebildet ist, um ergänzend die Geometrie des Gebindes (2, 3) zu ermitteln, wobei
der Wägesensor (6) als Drucksensormatte (6) mit flächig angeordneten Drucksensoren ausgebildet ist, sodass
anhand der topologischen Verteilung des Signals über die Drucksensoren gesehen eine Aussage über die Geometrie des Gebindes getroffen werden kann.

2. Schrank nach Anspruch 1, **dadurch gekennzeichnet, dass** die Drucksensormatte (6) mehrere Dünnfilm-Sensoren (10) in flächiger Verteilung aufweist.

3. Schrank nach Anspruch 2, **dadurch gekennzeichnet, dass** die Dünnfillm-Sensoren (10) auf Basis von Dehnungsmessstreifen arbeiten.

4. Schrank nach Anspruch 3, **dadurch gekennzeichnet, dass** die Dehnungsmessstreifen jeweils zu einer Wheatstoneschen Brücke verschaltet sind.

5. Schrank nach einem der Ansprüche 2 bis 4, **dadurch gekennzeichnet, dass** die Dünnfilm-Sensoren (10) einen dreischichtigen Aufbau aufweisen.

6. Schrank nach Anspruch 5, **dadurch gekennzeichnet, dass** bei den Dünnfilm-Sensoren (10) zwischen zwei elektrisch leitfähigen Außenschichten (11) eine elastisch komprimierbare Mittelschicht (12) angeordnet ist.

7. Schrank nach einem der Ansprüche 1 bis 6, **dadurch gekennzeichnet, dass** der Gefahrstoff (4) mit einem Identifizierungsmittel (13) ausgerüstet ist.

8. Schrank nach Anspruch 7, **dadurch gekennzeichnet, dass** das Identifizierungsmittel (13) als QR-Code, RFID-Tag, NFC-Tag etc. ausgebildet ist.

9. Schrank nach Anspruch 7 oder 8, **dadurch gekennzeichnet, dass** ein das Identifizierungsmittel (13) erfassendes Lesegerät (14) vorgesehen ist.

10. Schrank nach Anspruch 9, **dadurch gekennzeichnet, dass** das Lesegerät (14) mit der Steuereinheit (7) kommuniziert, um den Gefahrstoff (4) zu identifizieren.

11. Schrank nach einem der Ansprüche 1 bis 10, **dadurch gekennzeichnet, dass** ein den Gefahrstoff (4) charakterisierender Gefahrstoff-Identifizierungscode und ein zum Signal des Flächensensors gehöriger Gebinde-Identifizierungscode sowie ein Verbrauchs-Identifizierungscode in der Steuereinheit (7) miteinander verknüpft werden.

12. Schrank nach einem der Ansprüche 1 bis 11, **dadurch gekennzeichnet, dass** eine Zugangskontrolleinheit (15) für einen zutrittswilligen Benutzer vorgesehen ist.

13. Schrank nach Anspruch 12, **dadurch gekennzeichnet, dass** sich der zutrittswilliger Benutzer an der Zutrittskontrolleinheit (15) mit einem Code, einem Fingerabdruck, einem Ausweis etc. identifiziert.

## Claims

1. A safety cabinet (1) for accommodating and storing preferably at least one hazardous material (4) accommodated in a package (2, 3), with a base area (5) for accommodating the hazardous material (4) and with at least one weighing sensor (6) associated with the base area (5) and having a connected control unit (7) in order to record the hazardous material (4) with regard to its mass, its consumption, etc., **characterized in that**
the weighing sensor (6) is designed as a surface sensor in order to additionally determine the geometry of the package (2, 3), wherein
the weighing sensor (6) is designed as a pressure sensor mat (6) with planarly arranged pressure sensors, so that
based on the topological distribution of the signal as viewed across the pressure sensors, a statement can be made about the geometry of the package.

2. The cabinet according to claim 1, **characterized in that** the pressure sensor mat (6) has multiple thin-film sensors (10) arranged in planar distribution.

3. The cabinet according to claim 2, **characterized in that** the thin-film sensors (10) operate on the basis of strain gauges.

4. The cabinet according to claim 3, **characterized in that** the strain gauges are each interconnected to form a Wheatstone bridge.

5. The cabinet according to any one of claims 2 to 4, **characterized in that** the thin-film sensors (10) have a three-layer structure.

6. The cabinet according to claim 5, **characterized in that** in the case of the thin-film sensors (10), an elastically compressible middle layer (12) is arranged between two electrically conductive outer layers (11).

7. The cabinet according to any one of claims 1 to 6, **characterized in that** the hazardous material (4) is equipped with an identification means (13).

8. The cabinet according to claim 7, **characterized in that** the identification means (13) is designed as a QR code, RFID tag, NFC tag, etc.

9. The cabinet according to claim 7 or 8, **characterized in that** a reader (14) recording the identification means (13) is provided.

10. The cabinet according to claim 9, **characterized in that** the reader (14) communicates with the control unit (7) to identify the hazardous material (4).

11. The cabinet according to any one of claims 1 to 10, **characterized in that** a hazardous material identification code characterizing the hazardous material (4) and a package identification code belonging to the signal of the surface sensor as well as a consumption identification code are linked together in the control unit (7).

12. The cabinet according to any one of claims 1 to 11, **characterized in that** an access control unit (15) is provided for an access-willing user.

13. The cabinet according to claim 12, **characterized in that** the access-willing user identifies themselves at the access control unit (15) with a code, a fingerprint, an ID card, etc.

## Revendications

1. Armoire de sécurité (1) destinée à recevoir et à stocker de préférence au moins une substance dangereuse (4) logée dans un conteneur de conditionnement (2, 3), avec une surface de base (5) pour recevoir la substance dangereuse (4) et avec au moins un capteur de pesée (6) attribué à la surface de base (5) avec une unité de commande (7) raccordée pour saisir la substance dangereuse (4) eu égard à sa masse, sa consommation etc.,
**caractérisée en ce que**
le capteur de pesée (6) est constitué sous la forme d'un capteur de surface pour déterminer en complément le géométrie du conteneur de conditionnement (2, 3), sachant que
le capteur de pesée (6) est constitué sous la forme d'une natte de capteurs de pression (6) avec des capteurs de pression disposés en surface de telle manière
à l'aide de la répartition topologique du signal, vue par les capteurs de pression, il est possible de se prononcer sur la géométrie du conteneur de conditionnement.

2. Armoire selon la revendication 1, **caractérisée en ce que** la natte de capteurs de pression (6) comporte plusieurs capteurs à couches minces (10) en répartition de surface.

3. Armoire selon la revendication 2, **caractérisée en ce que** les capteurs à couches minces (10) fonctionnent sur la base de jauges extensométriques.

4. Armoire selon la revendication 3, **caractérisée en ce que** les jauges extensométriques sont respectivement connectées à un pont de Wheastone.

5. Armoire selon l'une quelconque des revendications 2 à 4, **caractérisée en ce que** les capteurs à couches minces (10) comportent une structure à trois couches.

6. Armoire selon la revendication 5, **caractérisée en ce que** concernant les capteurs à couches minces (10), une couche centrale (12) élastiquement comprimable est disposée entre deux couches extérieures électroconductrices (11).

7. Armoire selon l'une quelconque des revendications 1 à 6, **caractérisée en ce que** la substance dangereuse (4) est dotée d'un moyen d'identification (13).

8. Armoire selon la revendication 7, **caractérisée en ce que** le moyen d'identification (13) est constitué sous la forme d'un code de réponse rapide (QR), d'une étiquette d'identification par radiofréquence (RFID), d'une étiquette de communication en champ proche (NFC), etc.

9. Armoire selon la revendication 7 ou 8, **caractérisée en ce qu'**un lecteur (14) saisissant le moyen d'identification (13) est prévu.

10. Armoire selon la revendication 9, **caractérisée en ce que** le lecteur (14) communique avec l'unité de commande (7) pour identifier la substance dangereuse (4).

11. Armoire selon l'une quelconque des revendications 1 à 10, **caractérisée en ce qu'**un code d'identification de substance dangereuse caractérisant la substance dangereuse (4) et un code d'identification de conteneur de conditionnement correspondant au signal du capteur de surface ainsi qu'un code d'identification de consommation sont associés l'un à l'autre dans l'unité de commande (7).

12. Armoire selon l'une quelconque des revendications 1 à 11, **caractérisée en ce qu'**une unité de contrôle d'accès (15) est prévue pour un utilisateur souhaitant l'accès.

13. Armoire selon la revendication 12, **caractérisée en ce que** l'utilisateur souhaitant avoir accès à l'unité de contrôle d'accès (15) s'identifie avec un code, une empreinte digitale, un document d'identité etc.
